# FASCICULE DE BREVET EUROPEEN

(11) **EP 2 729 350 B1**
(45) Date de publication et mention de la délivrance du brevet: **15.11.2017**
(21) Numéro de dépôt: 11751622.9
(22) Date de dépôt: 07.07.2011
(51) Int. Cl.: B62K 3/00

(54) **TRICYCLE ULTRALÉGER, PLIABLE, À MOTEUR ÉLECTRIQUE**
ULTRALEICHTES KLAPPDREIRAD MIT ELEKTROMOTOR
FOLDABLE, ULTRA-LIGHTWEIGHT TRICYCLE HAVING AN ELECTRIC MOTOR

(43) Date de publication de la demande: 14.05.2014
(73) Titulaire: Parienti, Raoul, 06000 Nice (FR)
(72) Inventeur: Parienti, Raoul, 06000 Nice (FR)
(86) Numéro de dépôt international: PCT/FR2011/000400
(87) Numéro de publication internationale: WO 2012/004477

(56) Documents cités:
- EP-A1- 0 017 913
- EP-A1- 1 232 938
- EP-A1- 1 630 081
- WO-A1-00/74622
- WO-A1-02/36419
- GB-A- 2 466 241

## Description

### Domaine technique

La présente invention est relative à un nouveau moyen de transport ultraléger, individuel, particulièrement adapté pour se déplacer facilement dans les centres urbains et concerne en particulier un tricycle ultraléger, pliable, à moteur électrique.

### Etat de la technique

L'encombrement permanent des centres urbains, l'augmentation constante du prix du carburant et le développement de la sensibilité écologique pour la préservation de notre planète, ont pour effet la mise en oeuvre de moyens alternatifs de transport « propre ».

Le développement du vélo dans les villes et notamment les vélos en libre service répond en partie à la problématique, cependant ce mode de transport présente de nombreux inconvénients tels que le vol et le vandalisme qui sont courants quand les vélos sont stationnés dans la rue. En outre, il ne peut être envisageable d'avoir toujours son vélo avec soi et l'apporter à son lieu de travail ou à son domicile compte tenu de l'encombrement et du poids. De plus, la vitesse de déplacement est modeste et dépend des qualités athlétiques de l'utilisateur. Le vélo électrique apporte un début de solution à ce dernier point, en revanche, son poids encore plus important réduit sa portabilité.

De plus rouler en deux roues génère un fort sentiment d'insécurité et un risque majeur de chute. Chacun sait que déraper de la roue avant d'un vélo ou la bloquer par freinage entraine inévitablement la chute et des blessures pouvant être sévères.

On a donc pensé à utiliser des tricycles à propulsion électrique tels que ceux décrits dans les documents EP 1630081, WO 00/74622 et WO 02/36419. Mais ces tricycles sont lourds et encombrants dans la mesure où ils nécessitent une batterie d'alimentation électrique importante et donc lourde, et ne disposent pas de moyens permettant de réduire la vitesse et donc le poids de l'appareil. En conséquence il est quasiment impossible de placer un tel tricycle dans un véhicule automobile ou dans un ascenseur pour pouvoir le transporter sur le lieu d'utilisation.

### Exposé de l'invention

Le but de l'invention est donc un tricycle à moteur électrique dont la vitesse est limitée de façon à ce que le tricycle soit ultraléger du fait que les éléments qui le composent sont de taille réduite et puisse ainsi être transporté facilement sur le lieu d'utilisation.

L'objet de l'invention est donc un tricycle ultraléger motorisé électriquement comprenant un châssis pourvu de deux roues à l'avant et d'une roue motrice à l'arrière, un moteur électrique pour entraîner la roue motrice, une batterie d'alimentation pour fournir le courant électrique au moteur et une poutrelle de direction s'étendant depuis le châssis et comprenant un volant de direction configuré pour être manoeuvré par un utilisateur de façon à contrôler la direction et la vitesse du tricycle, le tricycle étant agencé de manière à passer d'une configuration dépliée dans laquelle la poutrelle de direction est en position sensiblement perpendiculaire au châssis et solidaire de ce dernier de manière à permettre à l'utilisateur positionné sur le châssis de manoeuvrer le volant de direction pour piloter le tricycle à une configuration pliée dans laquelle la poutrelle de direction est abaissée vers le châssis de manière à permettre à l'utilisateur de saisir le volant de direction pour faire rouler le tricycle sur les deux roues avant en maintenant la roue arrière éloignée du sol. Le tricycle comprend un tachymètre pour mesurer la vitesse du tricycle et une unité de commande de ralentissement/freinage connectée au tachymètre et adaptée pour commander la transformation du moteur en générateur de courant électrique fourni à la batterie lorsque la vitesse du moteur dépasse une vitesse prédéterminée par exemple comprise entre 20km/h et 30km/h de manière à ce que le tricycle ralentisse du fait que le moteur devenu générateur agisse comme frein.

### Description brève des dessins

Les buts, objets et caractéristiques de l'invention apparaîtront plus clairement à la lecture de la description qui suit faite en référence aux dessins dans lesquels :
la figure 1 représente une personne tirant le tricycle selon l'invention en configuration pliée sur les roues avant par le volant de direction ;
la figure 2 représente le tricycle selon l'invention en configuration dépliée ;
la figure 3 représente le bloc de direction avec les roues avant, les deux bras d'inclinaison et les biellettes de direction ;
la figure 4 est une représentation de la came solidaire du volant de direction sur la poutrelle de direction ;
la figure 5 est un bloc diagramme de la partie traction électrique du tricycle selon l'invention ; et
la figure 6 est un bloc diagramme de l'ensemble de la station de rechargement et de gardiennage.

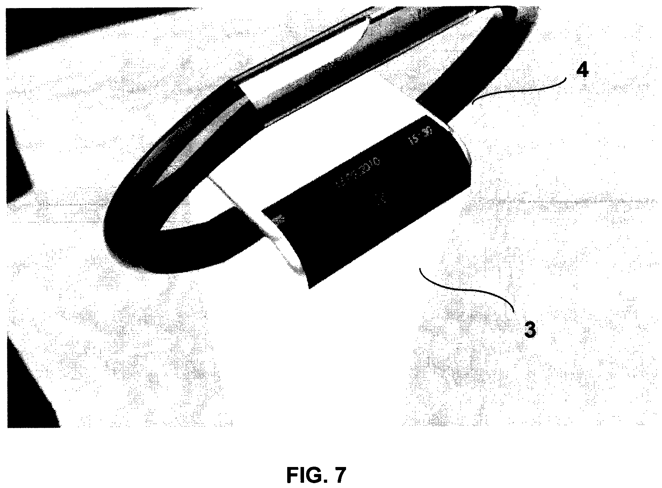

La figure 7 représente la poutrelle de direction, l'unité d'affichage avec le tachymètre et le volant.

### Description détaillée de l'invention

Le tricycle selon l'invention peut être soit dans une configuration pliée pour pouvoir être transporté, soit dans une configuration dépliée.

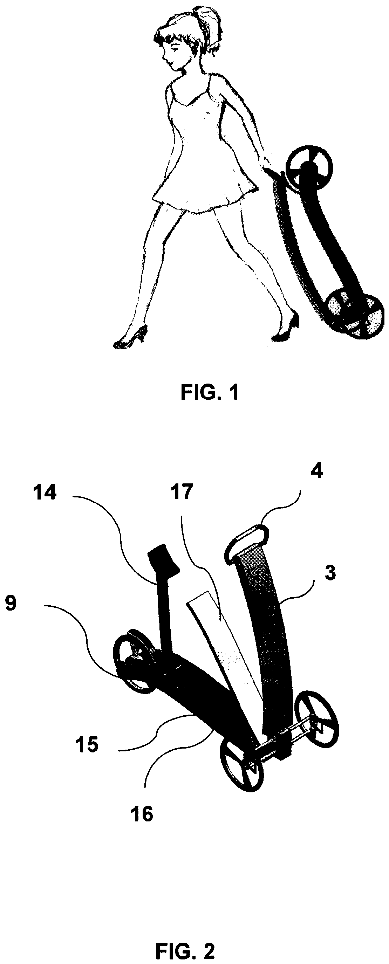

Le tricycle en configuration dépliée illustrée sur la figure 2 est pourvu d'un volant de direction 4 qui est solidarisé à une poutrelle de direction 3, la rotation du volant à droite ou à gauche provoque la rotation des deux roues avant dans le même sens. Comme on le verra par la suite, le volant de direction peut être manoeuvré par rotation avant-arrière, (ou l'inverse) cette manoeuvre provoquant l'accélération ou le ralentissement/freinage.

L'utilisateur a la faculté d'utiliser le tricycle soit en position assise, à l'instar d'un scooter grâce à une selle rétractable 14, ou encore debout comme avec une trottinette. Le châssis 15 est pourvu d'un évidement 16 protégé par un couvercle 17 lequel évidement contient la selle amovible 14 pouvant instantanément être mise en oeuvre ou repliée.

Le tricycle se met dans la configuration pliée illustrée sur la figure 1 grâce à une articulation pourvue d'un levier dont la rotation solidarise ou désolidarise la poutrelle de direction. Une fois plié, le tricycle peut être transporté facilement en roulant de façon stable sur les deux roues avant, le volant de direction faisant alors office de poignet de préhension, ce qui permet à l'utilisateur de déplacer le tricycle sans effort en le faisant rouler sur deux roues avants.

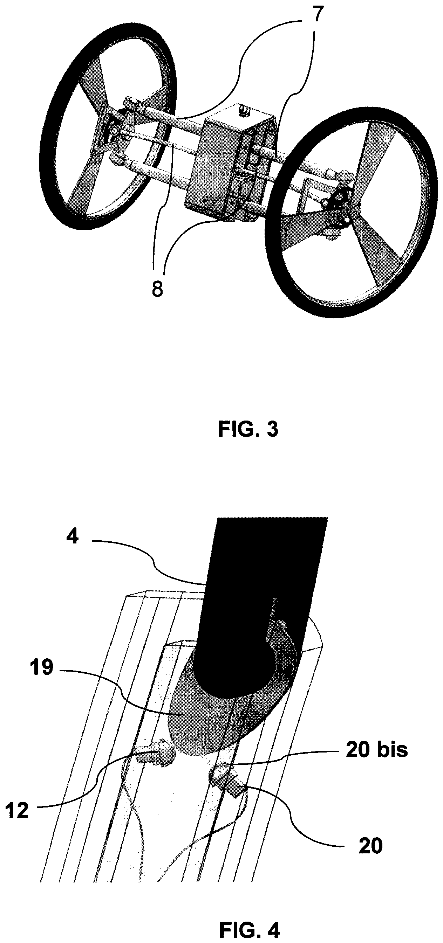

Comme on le voit sur la figure 3, la poutrelle de direction est solidarisée avec un bloc de direction via une articulation. Le bloc de direction assure le maintien et le guidage de deux bras d'inclinaison 7 et la manoeuvre des biellettes de direction 8.

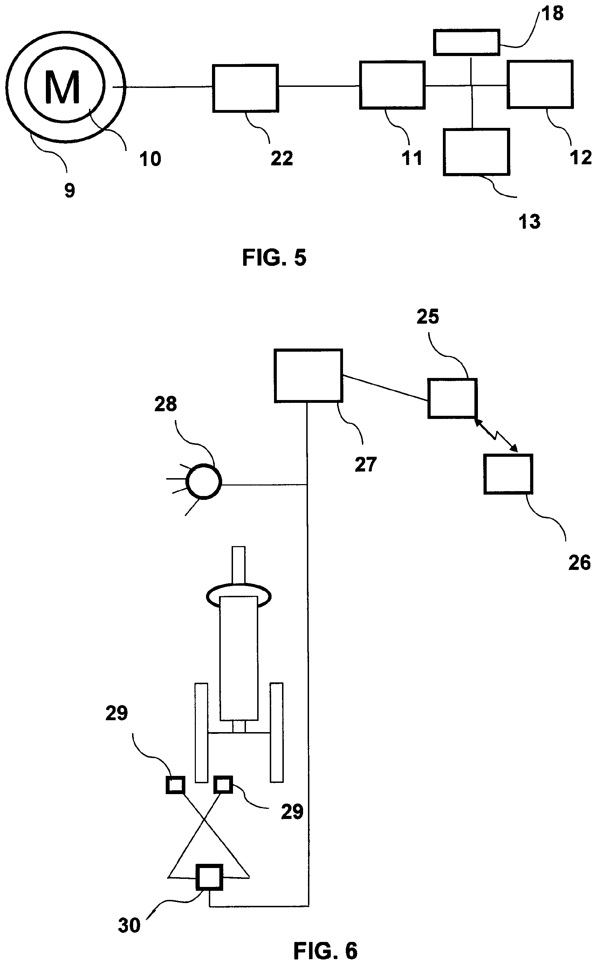

Comme représenté sur le bloc diagramme de la figure 5, la roue arrière 9 comporte dans son moyeu un moteur électrique 10 de type sans balais à aimants permanents alimentés par une ou plusieurs batteries 11. A noter que l'intégration du moteur dans le moyeu de la roue motrice évite d'avoir à utiliser un moyen de transmission tel qu'une chaîne, une courroie ou un cardan, ce qui permet de diminuer le poids et l'encombrement.

L'unité de commande de l'accélérateur 12 module la puissance fournie par le moteur via une unité de régulation 13, afin de doser l'accélération et la vitesse du tricycle.

Comme représenté sur la figure 4, la manoeuvre avant-arrière du volant de direction entraine une came 19 qui est solidaire avec celui-ci. L'excentrique de la came 19 agit progressivement sur une unité de commande d'accélération 12 quand le volant est manoeuvré par exemple vers l'avant, et sur une unité de commande de ralentissement/freinage 20, 20bis quand il est manoeuvré vers l'arrière. Une barre de torsion fait office de ressort de rappel, de sorte qu'au repos le volant revienne à la position neutre, à savoir que ni l'accélération ni le freinage ne sont activés

Le mouvement vers l'arrière (ou inversement) agit grâce à la came sur l'unité de commande de ralentissement 20bis pour ralentir le tricycle, ce qui a pour effet d'inverser la fonction moteur en fonction générateur afin de transformer progressivement l'énergie cinétique du tricycle en courant électrique, ce qui a pour effet de ralentir le tricycle et de recharger la batterie d'alimentation. Le courant récupéré par le moteur devenu générateur est redressé via un onduleur-redresseur 22 afin de le transformer en courant continu. Inversement, la fonction onduleur permet de transformer le courant continu issu de la batterie en courant alternatif pour alimenter le moteur 10 intégré dans le moyeu de la roue arrière.

L'action de tirer au maximum vers soi le volant de direction 4 provoque le freinage et l'arrêt du tricycle par actionnement progressif de freins à disque installés sur chaque roue.

L'effet de l'unité de commande de ralentissement décrite plus haut est déterminant pour l'invention. En effet, l'énergie cinétique croissant avec le carré de la vitesse, le tricycle ne disposant pas de ralentisseur électrique, il pourrait atteindre une vitesse importante en descente, ce qui impliquerait qu'il dispose d'une structure mécanique lourde, dimensionnée en conséquence pour être capable de répondre à de telles contraintes.

Pour que le tricycle ne subisse pas de contraintes mécaniques importantes liées à la vitesse et reste léger, le ralentissement se déclenche automatiquement dès que le tricycle atteint une vitesse prédéterminée, par exemple une vitesse comprise entre 20 km/h et 30 km/h. L'énergie électrique récupérée recharge en priorité la batterie et si besoin est dissipée par une résistance 18 adaptée.

Cette capacité de réduire la vitesse maximum du tricycle dans les descentes permet de réduire sensiblement le dimensionnement de la structure soumise aux contraintes mécaniques et donc le poids du tricycle. En effet, le tricycle pourrait atteindre en descente une vitesse de 65 KM/H et de ce fait subir des contraintes considérablement plus importantes que le même tricycle roulant à 25 km/h, le ratio étant de 65 au carré / 25 au carré, soit environ de 7.

La limitation de vitesse est donc le seul moyen adéquat pour réduire de façon sensible les épaisseurs de matière et la masse pour réaliser un véhicule ultraléger

Selon une variante de réalisation plus aboutie de l'invention, l'électronique embarquée intègre un accéléromètre dont le but est d'actionner le ralentisseur en fonction de la qualité de la route. Ainsi, si le tricycle aborde une descente et que l'accéléromètre détecte des vibrations importantes dues au mauvais état de la route, l'électronique provoque un ralentissement d'autant plus important que la route est chaotique. Par exemple, la vitesse maximum atteinte dans une descente sur une route de bonne qualité est de 30 km/h alors que sur une route en mauvaise état, la vitesse est ramenée à 25, voire 20kmh.

Selon une autre version de l'invention la manoeuvre avant-arrière du volant de direction provoque le déplacement de la poutrelle de direction qui est solidarisée avec le volant et a pour effet d'agir sur une pièce mécanique dont la rotation, via un démultiplicateur, permet d'entraîner en rotation la came non représentée, ce qui permet d'actionner les unités de commandes d'accélération, et de ralentissement/freinage tel que d'écrit plus haut.

A noter que le tricycle selon l'invention comprend une prise femelle conçue pour être connectée à une prise mâle d'un chargeur branché sur le secteur afin de recharger la batterie à son domicile et/ou au travail.

Les tricycles tels que le tricycle selon l'invention qui vient d'être décrit sont entreposés dans une station de rechargement et de gardiennage illustré par le bloc diagramme de la figure 6.

Plusieurs stations de rechargement et de gardiennage, associées à des lieux d'affichage publicitaire peuvent être réparties dans la ville et permettre de recharger plusieurs tricycles simultanément. Pour cette fonction, l'une des caractéristiques essentielles de l'invention décrite ci-dessus, à savoir la capacité du tricycle d'être plié et déplié instantanément, est déterminante car il sera possible de recharger simultanément un grand nombre de tricycles objet de l'invention, sans encombrer l'espace public.

Chaque tricycle est pourvu d'une puce électronique mémorisant un code identifiant unique et des moyens capables de transmettre à distances ledit code vers une station de rechargement gardiennage.

La station de recharge et gardiennage dispose d'une électronique 27 pourvue des moyens de mémoriser les codes des tricycles en recharge dans la station. L'utilisateur dispose d'un badge personnel 26 conçu pour coopérer à distance avec un capteur RFID 25 de la station de rechargement et de gardiennage, lequel capteur étant connecté avec l'électronique de la station. Ainsi, le badge personnel permet d'identifier et de déverrouiller son véhicule parmi d'autres lorsqu'il est dans une station de gardiennage-rechargement.

Le badge personnel peut également être conçu pour servir de clé de contact. Le tricycle comporte alors un capteur RFID vers lequel l'utilisateur doit approcher son badge 26 pour faire démarrer le tricycle.

La station de rechargement et de gardiennage est pourvue des moyens capables de récupérer et de mémoriser les codes identifiants uniques de chaque tricycle présent dans la station. Le transfert des données des puces des tricycles vers l'électronique 27 s'effectue selon tous les moyens connus, RFID, radiofréquence, infrarouge ou courant porteur, lors de la connexion du tricycle avec la station de rechargement.

Lorsque l'utilisateur veut récupérer son tricycle, il approche son badge 26 du capteur RFID 25 de la station, l'électronique 27 ayant auparavant mémorisé tous les tricycles en charge connus, déclenche le déverrouillage du tricycle identifié. Un signal lumineux 28 situé sur l'emplacement du tricycle clignote afin de signaler à l'utilisateur la position de son véhicule.

Le verrouillage-déverrouillage peut être réalisé selon toute technique connue, par exemple par pincement d'une des deux roues avant par deux mâchoires 29 actionnées par un électroaimant 30 lorsque les roues avant du tricycle en cours de stationnement se présentent sur une zone prévue à cet effet.

Selon une variante de réalisation, le tricycle peut comporter un ensemble de capteurs capables de déterminer les informations utiles à l'utilisateur telles que vitesse, niveau de charge des batteries, distance parcourue, distance restant avant la recharge, lesquelles informations s'affichent sur un écran incliné situé au-dessus de la poutrelle de direction.

Selon une autre variante, le tricycle peut comporter un coffre situé sur la poutrelle de direction dont le couvercle peut s'ouvrir et se fermer. Ce coffre peut contenir différents objets et notamment un panier pliable qui, une fois déplié, se fixe à la poutrelle de direction et permet à l'utilisateur de transporter tout objet utile, tels que cartable, courses.

Enfin, le tricycle selon l'invention étant un véhicule électrique, il est très silencieux et présente de ce fait un danger. C'est pourquoi on peut prévoir de l'équiper d'un dispositif émetteur d'une musique agréable et/ou amusante telle que le chant d'un oiseau, musique de clochettes, mélodie discrète etc.. L'utilisateur aura le choix entre plusieurs thèmes ou encore un son aléatoire. La musique entendue aura subi en temps réel un encodage dépendant d'un ou plusieurs facteurs variables tels que l'heure, la date, l'année, ou encore une combinaison de plusieurs facteurs variables et d'un facteur fixe tel que le numéro de série unique du tricycle. Cet encodage programmé est non décelable à l'écoute mais parfaitement identifiable avec un appareil conçu à cet effet. Il peut être réalisé de nombreux façons, par exemple en superposant au signal sonore de référence, une accentuation codée discrète de quelques db toutes les 50 millisecondes ou encore en encodant le temps qui sépare des accentuations ou encore une combinaison des 2 moyens, le code intégrant le numéro de série et la signature des paramètres variables. Un tel dispositif offre le double avantage au tricycle de rouler en sécurité parce qu'il ne passe pas inaperçu et qu'un tricycle volé ou contrefait peut être identifié immédiatement par identification du bon encodage et par comparaison avec une base de données de tricycles volés.

## Revendications

1. Tricycle ultraléger motorisé électriquement comprenant un châssis (15) pourvu de deux roues à l'avant et d'une roue motrice (9) à l'arrière, un moteur électrique (10) pour entraîner ladite roue motrice, une batterie d'alimentation (11) pour fournir le courant électrique audit moteur et une poutrelle de direction (3) s'étendant depuis le châssis et comprenant un volant de direction (4) configuré pour être manoeuvré par un utilisateur de façon à contrôler la direction et la vitesse du tricycle, le tricycle étant agencé de manière à passer d'une configuration dépliée dans laquelle ladite poutrelle de direction est en position sensiblement perpendiculaire audit châssis et solidaire de ce dernier de manière à permettre à l'utilisateur positionné sur le châssis de manoeuvrer ledit volant de direction pour piloter le tricycle à une configuration pliée dans laquelle ladite poutrelle de direction est abaissée vers le châssis de manière à permettre à l'utilisateur de saisir ledit volant de direction pour faire rouler le tricycle sur les deux roues avant en maintenant la roue arrière éloignée du sol ;
ledit tricycle étant **caractérisé en ce qu'**il comprend un tachymètre pour mesurer la vitesse du tricycle et une unité de commande de ralentissement/freinage (20, 20bis) connectée audit tachymètre et adaptée pour commander la transformation dudit moteur en générateur de courant électrique fourni à ladite batterie lorsque la vitesse dudit moteur dépasse une vitesse prédéterminée comprise entre 20km/h et 30km/h de manière à ce que le tricycle ralentisse du fait que ledit moteur devenu générateur agisse comme frein.

2. Tricycle selon la revendication 1, dans lequel ledit volant de direction (4) peut être mû vers l'avant ou vers l'arrière par l'utilisateur, les mouvements avant ou arrière dudit volant entraînant une came (19) solidaire dudit volant, le mouvement vers l'avant agissant grâce à ladite came sur une unité de commande d'accélération (12) pour accélérer le tricycle et le mouvement vers l'arrière agissant grâce à ladite came sur ladite unité de commande de ralentissement/freinage (20) pour ralentir le tricycle en transformant ledit moteur en générateur de courant électrique.

3. Tricycle selon la revendication 2, dans lequel ladite unité de commande de ralentissement/freinage (20) entraîne le freinage du tricycle après son ralentissement lorsque ledit volant de direction (4) est mû vers l'arrière par l'utilisateur à partir d'une position prédéterminée.

4. Tricycle selon la revendication 2 ou 3, dans lequel le mouvement dudit volant de direction (4) vers la droite ou vers la gauche provoque la rotation des roues avant dans le même sens et donc permet au tricycle de tourner à droite ou à gauche.

5. Tricycle selon l'une des revendications 1 à 4, dans lequel ladite configuration pliée est réalisée grâce à un moyen qui désolidarise ladite poutrelle de direction (3) dudit châssis (15) de manière à pouvoir l'abaisser vers ledit châssis.

6. Tricycle selon l'une quelconque des revendications 1 à 5, dans lequel ledit châssis (15) est pourvu d'un évidement (16) protégé par un couvercle (17) et contenant une selle amovible (14) permettant à l'utilisateur de rester assis pendant le déplacement du tricycle.

7. Tricycle selon l'une quelconque des revendications 1 à 6, comportant en outre une puce électronique mémorisant un code identifiant unique et des moyens capables de transmettre à distances ledit code vers une station de rechargement et de gardiennage.

8. Tricycle selon l'une quelconque des revendications 1 à 7, comportant en outre un ensemble de capteurs capables de déterminer les informations utiles à l'utilisateur telles que vitesse, niveau de charge de la batterie, distance parcourue, distance restant avant la recharge, lesdites informations s'affichant sur un écran incliné en bas dudit volant de direction (4).

9. Tricycle selon l'une quelconque des revendications 1 à 8, comportant en outre un dispositif émetteur d'une musique agréable et amusante qui a subi en temps réel un encodage dépendant d'un ou plusieurs facteurs variables tels que l'heure, la date, l'année, ou encore une combinaison de plusieurs facteur variables et d'un facteur fixe tel que le numéro de série unique du tricycle, ledit encodage étant non décelable à l'écoute mais parfaitement identifiable avec un appareil adéquat, de sorte que l'on puisse identifier immédiatement un tricycle volé ou contrefait.

10. tricycle selon l'une des revendications précédentes, dans lequel ledit moteur (10) est intégré dans le moyeu de la roue motrice (9), ce qui permet d'éviter d'utiliser un moyen de transmission tel qu'une chaîne, une courroie ou un cardan.

## Patentansprüche

1. Ultraleichtes und elektrisch motorisiertes Dreirad, das ein Fahrgestell (15) mit zwei Rädern vorne und mit einem Antriebsrad (9) hinten, einen dieses Antriebsrad antreibenden Elektromotor (10), eine Versorgungsbatterie (11), um den elektrischen Strom dieses Motor zu liefern, und eine von dem Fahrgestell ausgehende Lenksäule (3) mit einem Lenkrad (4)umfasst. Dieses Lenkrad ist konfiguriert, damit es von einem Benutzer richtig handgehabt ist, so dass die Richtung und/oder die Geschwindigkeit des Dreirades kontrolliert ist. Das Dreirad ist so angeordnet, damit der Benutzer von einer entfalteten Konfiguration, in deren diese Lenksäule senkrecht zu dem oben erwähnten Fahrgestell und mit diesem so verbunden ist, dass den Benutzer erlaubt, auf das oben erwähnten Fahrgestell zu sitzen und das Lenkrad zu steuern, zur anderen gefalteten Konfiguration, in deren die erwähnte Lenksäule auf dem Fahrgestell abgesenkt ist,sodass der Benutzer das genannte Lenkrad ergreifen kann, um das Dreirad auf die beiden Vorderräder zu fahren, indem er das Hinterrad entfernt vom Boden hält ;
Dieses Dreirad **dadurch gekennzeichnet, dass** es einen Tachometer, um die Geschwindigkeit des Dreirades zu messen, und eine Bremssteuereinheit (20,20a), die mit dem Tachometer verbunden und geeignet ist, um die Motorsumwandlung in einem elektrischen und an die Batterie geliefertenden Stromgenerator zu steurn, wenn die Geschwindigkeit dieses Motors eine vorbestimmte Geschwindigkeit zwischen 20km/h und 30km/h überschreitet, sodass das Dreirad verlangsamt, zufolge dass der als Generator gewordene Motor als Bremse wirkt.

2. Ein Dreirad gemäss Anspruch 1, wobei das Lenkrad (4) nach vorne oder nach hinten von dem Benutzer bewegbar sein kann, diese Bewegungen vorne oder hinten des Lenkrades eine verbundene Nocke (19) mit ihm bewirken, die Bewegung nach vorne wirkend dank dieser Nocke auf diese Beschleuningungsregelungseinheit (12), um ein Dreirad zu beschleunigen, und die Bewegung nach hinten wirkend dank dieser Nocke auf diese Bremssteuereinheit (20), um das Dreirad zu bremsen indem es den Motor in einem elektrischen Stromgenerator umwandelt.

3. Ein Dreirad gemäss Anspruch 2, wobei diese Bremssteuereinheit (20) die Bremsung des Dreirads nach seiner Verlangsamung bewirkt, wenn dieses Lenkrad (4) von dem Benutzer nach hinten mit einer vorbestimmten Position bewogen ist.

4. Ein Dreirad gemäss Anspruch 2 oder 3, wobei die Bewegung des erwähnten Lenkrads (4) nach rechts oder nach links die Drehung der Vorräder in dieselbe Richtung bewirkt und folglich dem Dreirad erlaubt, nach rechts oder nach links zu drehen.

5. Ein Dreirad gemäss einem der Ansprüche 1 bis 4, in dem die erwähnte gefaltete Konfiguration dank einem Mittel durchgeführt ist, das die erwähnte Lenksäule (3) dem erwähnten Fahrgestell trennt, sodass sie auf das Fahrgestell abgesenkt sein kann.

6. Ein Dreirad gemäss einem der irgendeinen Ansprüche 1 bis 5, wobei das erwähnte Fahrgestell (15) mit einer von einer Abdeckung(17) geschützte Ausnehmung(16)ausgetattet ist und mit einem abnehmbaren Sattel (14), das dem Benutzer erlaubt, während der Dreiradsbewegung zu sitzen.

7. Ein Dreirad gemäss der irgendeinen Ansprüche 1 bis 6, das ferner einen Mikrochip beinhält, und der einen Code mit eindeutiger Identifizierung und mit Mitteln speichert, die aus der Entfernung den erwähnten Code an die gleichzeitig Wachdiensts- und Ladestation senden.

8. Ein Dreirad gemäss der irgendeinen Ansprüche 1 bis 7, das ferner ein Feld von Sensoren beinhält, die fähig sind, dem Benutzer die nützliche Information zu ermitteln, wie die Geschwindigkeit, der Akku-Stand, die zurückgelegte Strecke, die Entfernung bis zum Aufladen, diese Information zeigen auf einem Schrägbildschrim unten dem Lenkrad (4) an.

9. Ein Dreirad gemäss der irgendeinen Ansprüche 1 bis 8, das ferner eine angenehme und lustige Musik aussendende Vorrichtung beinhält, die in Echtzeit eine von einem oder mehreren variablen Faktoren abhängige Kodierung unterlag, wie die Uhr, das Datume, das Jahr oder noch eine Kombination von mehreren variablen Faktoren und von einem festen Faktor, zum Beispiel die einmalige Seriennummer des Dreirades. Diese Kodierung ist nicht erkennbar zum Hören aber perfekt identifizierbar mit einem passenden Gerät, sodass man sofort ein gestohles oder gefälschtes Dreirad identifizieren kann.

10. Ein Dreirad gemäss einer der vorherigen Ansprüche, wobei der Motor (10) in dem Mittel des Antriebsrades (9) integriert ist, das die Vermeidung erlaubt, eine andere Art der Übermittlung wie eine Kette, einen Riemen oder einen Kardan, zu benutzen.

## Claims

1. Ultralight and electronically powered tricycle including a chassis (15) fitted with two front wheels and a drive rear wheel (9), a electric motor (10) to lead that drive wheel, a suppy battery (11) to provide the electrical power to that motor and a steering column (3) based on the chassis and including a steering wheel(4) designed to be driven by an user in order to control the direction and/or the speed of the tricycle, the tricycle is designed so that it could switch from an unfolded configuration, in which that steering column is in a position perceptibly perpendicular to that chassis and fixed to the latter so that the user sit on the chassis can drive that steering wheel of the tricycle, to a folded configuration in which that steering column is lowered to the chassis so that the user can grip the steering wheel to let the tricycle front wheels roll up and with the rear wheel lifted off the ground ;
That tricycle being **characterised in that** it includes a tachometer to measure the tricycle's speed and a control unit for deceleration/braking (20, 20bis) connected to that tachometer and adapted to control the transformation of said motor into a power generator provided by said battery when the speed of said motor exceeds a predetermined speed between 20km/h and 30km/h, so that the tricycle slows by the fact that said moteur become generator acts as a brake.

2. Tricycle according claim 1, wherein said steering wheel(4) can be moved forward or backward by the user, the forth or back movement of said sterring wheel involving a cam (19) fixed by said steering wheel, the forth movement acting by said cam on a control unit for acceleration (12) in order to accelerate the tricycle an the back movement acting by said cam on said control unit for deceleration/braking (20) in order to slow the tricycle by transforming said motor into power generator.

3. Tricycle according claim 2, wherein said control unit for deceleration/braking (20) involve the tricycle braking after its deceleration when said steering wheel(4) is moved backward by the user from a predetermined position.

4. Tricycle according claim 2 or 3, wherein the movement of said steering wheel (4) to the right or to the left cause the rotation of the front wheels in the same direction and thus allows the tricycle to turn to the right or to the left.

5. Tricycle according to one of the claim 1 to 4, wherein said folded configuration is done by a process that disunites said steering column(3) of said chassis (15) in order to lower it to said chassis.

6. Tricycle according to one of claims 1 to 5, wherein said chassis(15) is fitted with a recess(16) protected by a cover(17) and containing a removable saddle(14), which allows the user to sit during the tricycle movement.

7. Tricycle according to one of claims 1 to 6, including furthermore an electronic chip memorising an Unique Identifier Code and means able to transmit remotely said code to a recharging and daycare services station.

8. Tricycle according to one of claims 1 to 7, including furthermore a set of sensors able to determine the useful information to the user such as speed, charge level of the battery, distance travelled, distance remaining before the charge, said information displays on a tilted screen in the bottom of said steering wheel(4).

9. Tricycle according to one of claims 1 to 8, including furthermore a pleasing and funny music emitting device that was encoded in real-time dependent on one or various factors, such as the time, the date, the year, or even a combination of several varying factors and of one fixed factor such as the unique serial number of the tricycle, said encoding is not detectable soundly but perfectly identifiable with an appropriate device, so that we could identify immediately a stohlen or counterfeit tricycle.

10. Tricycle according to one of previous claims, wherein said motor(10) is integrated in the system of the drive wheel (9), which can help to avoid using a method of transmission such as a chain, a belt or a cardan.
